Europäisches Patentamt

European Patent Office

Office européen des brevets

(19)

(11) Publication number: **0 417 342 A1**

# EUROPEAN PATENT APPLICATION

(21) Application number: 89116925.2

(22) Date of filing: 13.09.89

(51) Int. Cl.⁵: **B01D 19/00, C02F 1/20**

A request for addition of page 2a to the originally filed description has been filed pursuant to Rule 88 EPC. A decision on the request will be taken during the proceedings before the Examining Division (Guidelines for Examination in the EPO, A-V, 2.2).

(43) Date of publication of application:
**20.03.91 Bulletin 91/12**

(84) Designated Contracting States:
**AT BE CH DE ES FR IT LI LU NL SE**

(71) Applicant: **British Steel plc**
**9 Albert Embankment**

London SE1 7SN(GB)

(72) Inventor: **James, David Maldwyn**
**6 Stephens Crescent**
**Govilon Abergavenny Gwent NP7 9RL(GB)**
Inventor: **Elliott, Wallace John**
**29 Beechwood Road Llangattock Park**
**Crickhowell Powys NP8 1PL(GB)**

(74) Representative: **Broughton, Clifford David**
**British Steel plc Patent Section 9 Albert**
**Embankment**
**London SE1 7SN(GB)**

(54) **De-aeration of water.**

(57) Boiler feed water requires de-oxygenating to remove the dissolved oxygen from eg saturation levels of 9 to 10 ppm to practically zero before use in the boiler. The present invention provides a method of de-oxygenating water by bubbling nitrogen gas (9) through the water to scavenge the dissolved oxygen therein.

Preferably the method is performed at ambient temperature thus readily permitting the use of condensing economisers upstream of the boiler(s).

## FIG.2(b)

EP 0 417 342 A1

# DE-AERATION OF WATER

This invention relates to de-oxygenating (de-aeration) of water.

Boiler feed water requires de-oxygenating to remove the dissolved oxygen from e.g. saturation levels of 9 to 10 ppm to practically zero before use in the boiler. This is necessary because of the corrosive effect of oxygen on the iron-and steel-based structure and pipework of the boiler system, especially at elevated temperatures.

Hitherto de-oxygenation has involved the use of steam injection plus chemical additions to the feedwater; more particularly the steam is used to raise the temperature of the feedwater in a holding tank (thus reducing the oxygen to a low level of, say, 2/3 ppm) and e.g. catalysed sodium sulphite is used as a scavenging medium to remove the last traces of oxygen before passage to the boiler economiser, and thence to the boiler(s).

It is an object of this invention to provide an improved method of de-oxygenating water.

From one aspect the present invention provides a method of de-oxygenating water by bubbling nitrogen gas through the water to scavenge the dissolved oxygen therein.

Preferably the method is performed at ambient temperature thus readily permitting the use of condensing economisers upstream of the boiler(s).

Basically, this invention is based on the recognition that when a gas is bubbled through water in which another gas is dissolved the bubbled gas gradually removes and replaces the dissolved gas provided that their solubilities are similar. In particular, we have found that in one scheme adopted approximately one volume of oxygen-saturated water was readily de-oxygenated to a level of 0.05 ppm when two volumes of nitrogen were bubbled through that water for a specific period, accompanied by a small degree of chemical scavenging/polishing.

In order that the invention may be fully understood one embodiment thereof will now be described with reference to the accompanying drawings, in which:-

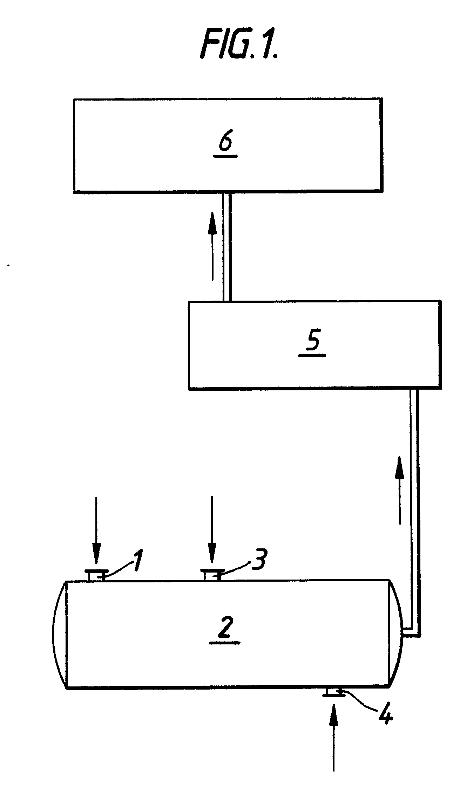

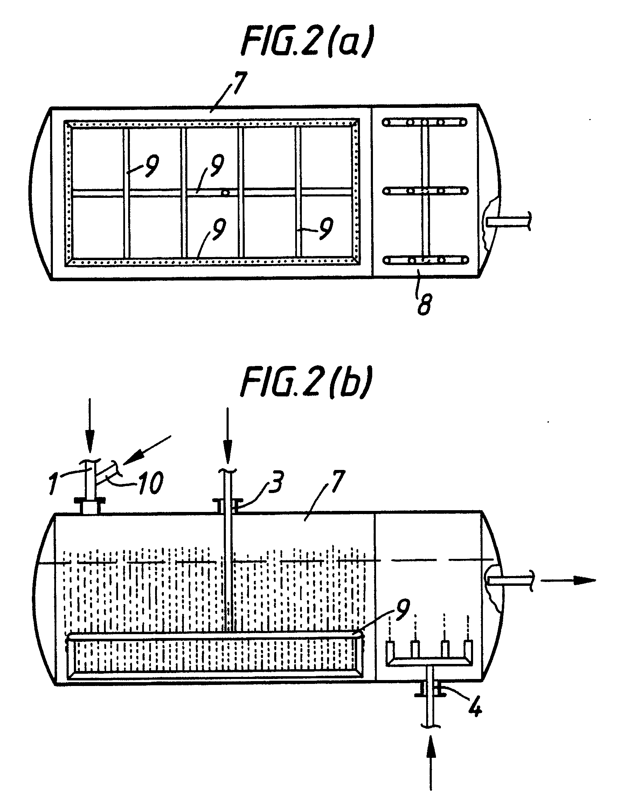

Figure 1 is a schematic illustration of the method applied to a boiler;

pipes 9 set into the cold well, these pipes having a multiplicity of outlets by which the gas bubbles upwardly through the water in a horizontal and vertical purge pattern effecting de-aeration. Chemical dosing with sodium sulphite introduced at 10 into the feedwater stream effects a scavenging and polishing action such that in the hot well the last traces of oxygen are removed.

Typically, the temperature of the feedwater may be about 8°C with the temperature at the output from the hot well about 55°C. Whereas a reduction in the temperature of the hot well can be accomplished without adversely affecting the degree of de-aeration it has been found that with a condensing economiser external condensation may occur on the stack as the dew point temperature of the stack gases is reached with lower temperatures. Thus, in the scheme described 55°C is regarded as the minimum temperature.

The chemical reaction within the tank is such that the sodium sulphite is converted to sodium sulphate by taking up the oxygen. This turns the water slightly acidic which thus has to be neutralised before passage to the economiser by e.g. sodium hydroxide. This is conveniently introduced in the pipework circuit between the hot well outlet of the tank and the economiser.

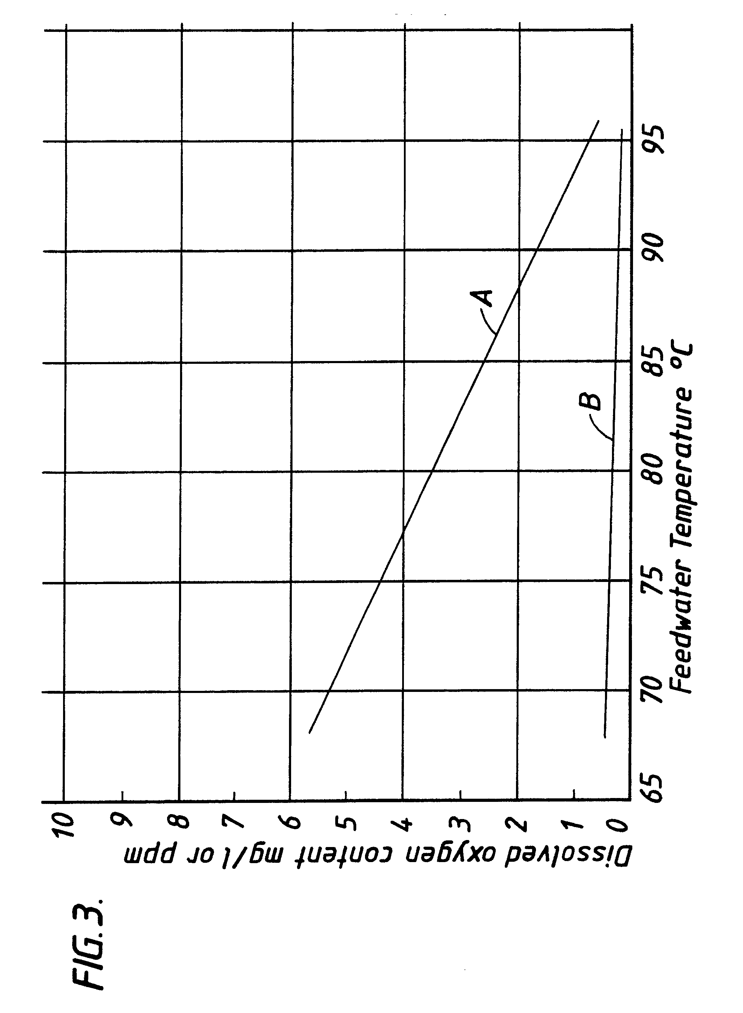

Figure 3 graphically illustrates the dissolved oxygen content in the input feedwater to the boiler, as a function of temperature, without de-oxygenation (trace A) on the one hand, and with de-oxygenation in accordance with this invention (trace B), on the other.

The efficiency of this 'low temperature' proposal for nitrogen purging the tank is principally characterised by a reduction in the steam consumption in the hot well together with a reduction in the chemical scavenging cost (sodium sulphite) but for the scheme as a whole the facility to utilise condensing economisers is of paramount benefit. Condensing economisers are over 90% efficient - much higher than non-condensing economisers - the latent heat of the water vapour formed in the combustion reaction being recovered in the form of extra preheat in the boiler feedwater.

Further, a small saving is effected in the reduced level of neutraliser (sodium hydroxide) now necessary by reason of the reduction in the scavenging chemical treatment.

Nitrogen costs must be discounted from the above calculations but in many instances of bulk usage where such a boiler scheme is in operation, e.g. in steelmaking or steel processing plants, contract conditions are such that excess nitrogen is available at no or only nominal cost.

Potential overall boiler thermal efficiency savings of the order of 10% may be achieved with this scheme, with much reduced corrosion levels.

Although this invention has been described with reference to the specific embodiment illustrated, it is to be understood that various modifications may readily be made without departing from the scope of this invention. Further, the principle of nitrogen de-oxygenation is not necessarily linked to boiler usage; for example, cooling water for bearings etc. may readily be treated in this fashion to reduce the incidence of corrosion.

## Claims

1. A method of de-oxygenating water, characterised by bubbling nitrogen gas (9) through the water (7) to scavenge the dissolved oxygen therein.

2. A method according to Claim 1, characterised in that the water is at ambient temperature.

3. A method according to Claim 1 or Claim 2, characterised in that the water is dosed with chemicals (10) operative to reduce still further the oxygen content.

4. A method according to Claim 3, characterised in that the chemical introduced is sodium sulphite.

5. A method according to any one of Claims 1 to 4 characterised in that, subsequent to nitrogen treatment the temperature of the treated water is raised to a controlled level.

6. A method according to claim 5, characterised by the use of steam (4) to raise the temperature of the water.

7. A method according to claim 6, characterised in that the nitrogen bubbling is effected in one section of two-part water tank (2), the steam heating being effected in the other part.

8. A method according to any one of claims 1 to 7, characterised in that the de-oxygenated water is fed to a boiler (6).

9. A method according to Claim 8, characterised in that the de-oxygenated water is fed to the boiler via a condensing economiser (5).

# FIG.1.

# FIG.2(a)

# FIG.2(b)

FIG.3.

EP 0 417 342 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 202 167 (MOBIL OIL CORP.) * Page 3, lines 2-6; page 5, lines 15-34; figure 2 * | 1-4 | B 01 D 19/00 C 02 F 1/20 |
| Y | | 3,4 | |
| Y | US-A-4 627 921 (MEYERS et al.) * Column 3, lines 13-19,31-35 * | 3,4 | |
| A | | 2 | |
| X | GB-A- 161 574 (AG FÜR STICHSTOFFDÜNGER) * Page 1, lines 36-47; page 1, line 72 - page 2, line 2 * | 1,8 | |
| A | US-A-4 365 978 (SCOTT) * Figur * | 1 | |
| A | GB-A-2 164 582 (H.G. MOJONNIER) * Figure 1; page 3, lines 78-80; page 5, lines 7-14 * | 1,6,7 | |
| A | FR-A-2 349 604 (SUMITOMO CHEMICAL) * Page 3, line 35 - page 4, line 5 * | 6 | TECHNICAL FIELDS SEARCHED (Int. Cl.5) B 01 D C 02 F |
| A | FR-E- 34 664 (SOCIETE DES CONDENSEURS DELAS) * Claims * | 9 | |

The present search report has been drawn up for all claims

| Place of search | Date of completion of the search | Examiner |
|---|---|---|
| THE HAGUE | 14-05-1990 | VAN BELLEGHEM W.R. |

EPO FORM 1503 03.82 (P0401)